# EUROPEAN PATENT SPECIFICATION

(11) **EP 4 026 732 B1**
(45) Date of publication and mention of the grant of the patent: **17.06.2026**
(21) Application number: 22150389.9
(22) Date of filing: 05.01.2022
(51) Int. Cl.: B60Q 1/04, F21S 41/50, B60R 13/04, B60R 13/02, B60R 1/00

(54) **AESTHETIC FINISHING ELEMENT AND SYSTEM FOR A VEHICLE ELEMENT LIKE A LIGHTING DEVICE AND VEHICLES PROVIDED THEREWITH**
ÄSTHETISCHES ABSCHLUSSELEMENT UND SYSTEM FÜR EIN FAHRZEUGELEMENT WIE Z. B. EINE BELEUCHTUNGSVORRICHTUNG UND FAHRZEUGE DAMIT
ÉLÉMENT ET SYSTÈME DE FINITION ESTHÉTIQUE D'UN ÉLÉMENT D'UN VÉHICULE COMME D'UN DISPOSITIF D'ÉCLAIRAGE ET VÉHICULES AINSI ÉQUIPÉS

(30) Priority: 08.01.2021 IT 202100000290
(43) Date of publication of application: 13.07.2022
(73) Proprietor: Marelli Automotive Lighting Italy S.p.A. Con Socio Unico, 10078 Venaria Reale (TO) (IT)
(72) Inventor: FALESSI, Alessandro, 10078 VENARIA REALE (TO) (IT); VAGLIERA, Cristiano, 10078 VENARIA REALE (TO) (IT); MUSCATO, Massimo, 10078 VENARIA REALE (TO) (IT)
(74) Representative: Studio Torta S.p.A.

(56) References cited:
- FR-A1- 2 698 058
- FR-A1- 2 881 703
- JP-A- 2012 099 326

## Description

### Cross-reference to related applications

This patent application claims priority from Italian patent application no. 102021000000290 filed on January 8, 2021.

### Technical field of the invention

The invention relates to an aesthetic finishing system and associated finishing element, for example consisting of an annular (or semi-annular) frame, preferably - though not exclusively - a chrome-plated or coloured one, technically known as "bezel", which can advantageously be used in a vehicle lighting device, and/or consisting of a frame, which can be used on a front (or rear) part of a vehicle, for example in the area of the radiator or of the front bumper, in order to create a mask that stylistically "joins" a pair of headlamps, for example the headlights (usually aligned with the vehicle radiator) or fog lights (usually aligned with a grille or another part of the bumper).

The invention further relates to a vehicle provided with the finishing element according to the invention.

### Background Art

As it is known, the largest part of vehicle lighting devices currently used, in particular vehicle headlamps, comprise a cup-shaped body, which is closed at the front by an element or lens, which can be a clear lens, namely a completely transparent lens, or a lens provided with optical functions, said lens (and/or the entire headlight body) being capable of having, for stylistic reasons, complex shapes delimited by curved surfaces.

Annular or semi-annular frames, known as "bezels", are applied onto the lens (and/or on part of the headlight body). Said frames are an aesthetic finishing element of the lighting device and/or of the vehicle as a whole, which has to join, substantially in a continuous manner, at least at a first sight, or anyway to relate with other finishing elements, having a similar or different shape, present in other components of the vehicle.

For example, in case of a pair of headlamps, the aesthetic finishing frame of the headlamp on the inboard side (or driver's side) must be arranged in a symmetrical manner relative to the aesthetic finishing frame of the outboard headlamp (on the passenger's side). Furthermore, the two aesthetic finishing frames of the pair of headlamps must join other vehicle body elements arranged between the pair of headlamps, for example a radiator grill or a part of the vehicle bumper, which, if necessary, are provided themselves with similar aesthetic finishing elements, for example straight or curved profiles, which delimit the aforesaid vehicle body elements arranged between the pair of headlamps.

However, due to processing tolerances, when fitting these finishing elements on board the vehicle, it can be especially hard to place the bezels present on the lenses of the headlamps in a joined and/or coordinated manner relative to one another and/or relative to the other aesthetic elements present on the front (or rear) part of the vehicle.

This difficulty, on the one hand, leads to stylistic limitations in the design of the bezels and/or of the lenses and/or of the headlight bodies and, on the other hand, makes the installation of the headlamps in the vehicle slow, difficult and, hence, expensive, since inevitable misalignments have to be solved. Furthermore, the necessary adjustments during the installation phase can cause stresses that can provoke, also due to driving vibrations, detachments of parts of the bezel from the lens, in particular in those points where the lens reaches it maximum bending. FR2881703A1 and JP2012099326A disclose aesthetic finishing elements, that do not solve the above problems.

### Summary of the invention

The object of the invention is to provide an aesthetic finishing system for front or rear panels of vehicles using several aesthetic finishing elements coupled to one another and the associated element, for example consisting of an annular (or semi-annular) frame or of a straight or curved profile, preferably - though not exclusively - a chrome-plated or coloured one and technically known as "bezel", which can advantageously be used in a vehicle lighting device, in particular in a pair of vehicle headlamps, or - anyway - can be used on a front (or rear) part or panel of a vehicle and which does not suffer from the drawbacks of the prior art, in particular wherein it can easily be aligned, despite processing tolerances, with a corresponding aesthetic finishing element of the front or rear panel of the vehicle present, for example, in an associated lighting device, which, in turn, is provided with a similar aesthetic finishing element, or in another vehicle body element associated therewith.

Hence, according to the invention, there are provided an aesthetic finishing system and associated eelment, which preferably - though not exclusively - include an annular (or semi-annular) frame, which can be associated with/coupled to a vehicle lighting device or another vehicle body part, such aesthetic finishing system and associated elements having the features set forth in the appended claims.

According to the invention, there is also provided a vehicle provided with at least one aesthetic finishing element.

In particular, the aesthetic finishing element can be coupled to a vehicle element, for example a lighting device, such as a head lamp or a rear lamp of the vehicle, and/or to a front or rear part of the vehicle, such as a radiator grille or a bumper portion.

The aesthetic finishing comprises a support having a first face, which is configured to be attached in a fixed manner to the vehicle element, and a second face, which is opposite the first face and, in use, faces away from the vehicle element.

The aesthetic finishing element further comprises a profiled element, which is shaped like a channel and is coupled integrally to the support, on the side of the second face.

According to an aspect of the invention, the profiled element in the system is coupled to the support in a sliding manner in a direction that is parallel to the second face, since at least a first stretch of the support and a corresponding second stretch of the profiled element are provided with sliding elements having a matching shape, a male and a female respectively or vice versa, which are coupled to one another in a snapping manner and are configured to allow the support and the profiled element to slide relative to one another.

According to a possible embodiment, the aesthetic finishing element consists of an annular or semi-annular frame, which is configured to be coupled, in an integral manner, on the outside of a lens of a vehicle lighting device.

In this case, the profiled element is shaped like a frame, which is fitted onto the support, which is glued or anyway fixed to the lens.

The profiled element comprises at least two straight or curved branches, which extend in the sliding direction, and the support is made up of at least to or more elements, which are associated with one another and extend under the branches of the profiled element, which include the second stretches along at least part of their length, whereas the elements of the support associated with one another are provided with the first stretches along their entire length.

According to a different embodiment, on the other hand, the aesthetic finishing element consists of a frame, which is substantially straight in the sliding direction and is configured to be coupled, in an integral manner, to a vehicle element consisting of a front or rear part of the vehicle, for example to a radiator grille or a bumper or a bumper portion.

The profiled element is divided into two segments, which are substantially straight in the sliding direction, and the support is glued or anyway fixed to the vehicle element, such as a front or rear part of the vehicle.

In this embodiment, the support is made up of at least two or more pairs of elements, which are associated with one another and extend under the two segments of the profiled element.

These segments include the second stretches along at least part of their length, whereas the elements of the support associated with one another are provided with the first stretches along their entire length.

In this way, the segments are relatively movable in the sliding direction so that they can selectively move close to or away from one another and towards respective headlamps or lights of the vehicle arranged on opposite sides of the vehicle element.

The aesthetic finishing element further comprises a mask, which can be fitted, in a snapping manner, onto the adjacent opposite ends of the two segments into which the profiled element is divided.

The aesthetic finishing element according to the first embodiment described above can be coupled to the that one according to the second embodiment described above, so as to obtain an adjustable aesthetic finishing element for the front or rear panel of a vehicle.

In this case, each vehicle lighting device, headlamp or light used in pairs is provided with an aesthetic finishing element, in which at least one first fastening element projects at a first end of the branches of the profiled element facing, in use, an inboard side or vehicle centre of the lighting device.

Said first fastening element is configured to be coupled, in a direction that is perpendicular to the sliding direction, to a second fastening element of a second aesthetic finishing element, which is configured to be coupled, in an integral manner, to a second vehicle element arranged alongside the inboard side of the lighting device, such as a front or rear part of the vehicle.

The first fastening element is further configured to be coupled to the second fastening element so as to stop the sliding, relative to the support, of at least one profiled element of one of the two (or of both) aesthetic finishing elements coupled to one another.

### Brief Description of the Drawings

Further features and advantages of the invention will be best understood in the light of the following description of some non-limiting embodiments thereof, with reference to the figures of the accompanying drawings, wherein:
- figure 1 schematically shows a front elevation view of a front panel of a vehicle including a pair of lighting devices, in the non-limiting example shown herein consisting of a pair of vehicle headlamps symmetrical to one another, each lighting device being provided with an aesthetic finishing element of the system according to the invention;
- figure 2 schematically shows the same front elevation view as figure 1 of a front panel of a vehicle provided with a different embodiment of the aesthetic finishing element, which is configured to be used on a vehicle body part arranged between the pair of headlamps;
- figure 3 schematically shows, on a larger scale, a sectional view according to a section plane III-III and which is shown only in part for the sake of simplicity, of the first embodiment of figure 1 of the aesthetic finishing element of figure 1;
- figure 4 schematically shows how the aesthetic finishing element of figure 1 is configured;
- figures 5, 6 and 7 schematically show, on a larger scale, a same sectional view according to a section plane V-V of three different embodiments of a same essential component of the aesthetic finishing element; and
- figure 8 schematically shows, on a larger scale, the same sectional view as figure 3 of an embodiment, in which several aesthetic finishing elements are used, said several aesthetic finishing elements being coordinated with one another so as to form a finishing system, for example for a vehicle front panel of figures 1 and 2, according to the invention.

### Detailed description

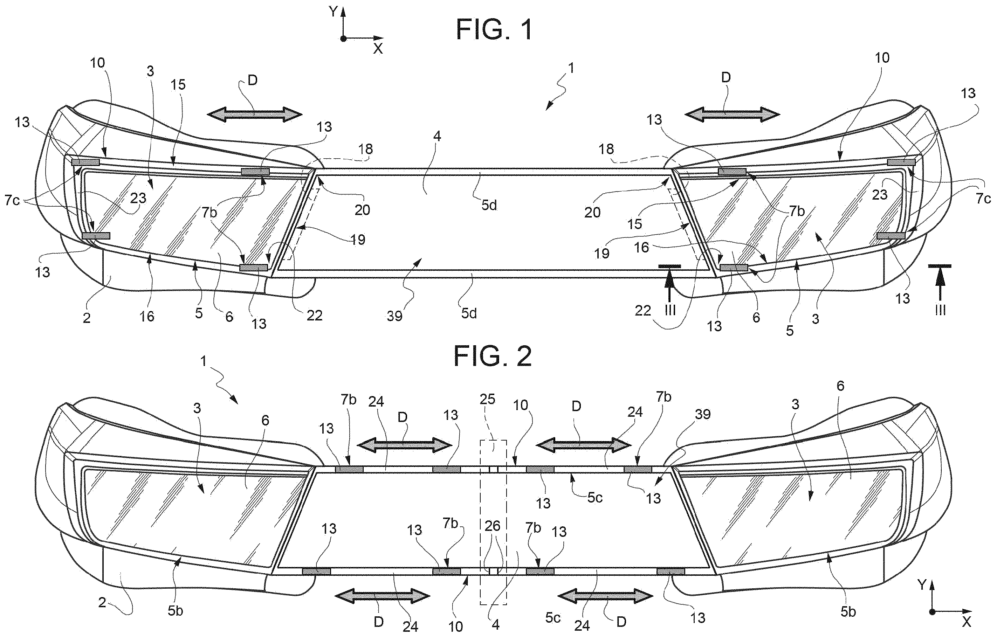

With reference to figures 1 and 2, number 1 indicates, as a whole, a front panel of a known vehicle 2, only a body portion of the vehicle being shown for the sake of simplicity.

The front panel 1 equips the front part of the vehicle 2 and comprises a pair of headlamps 3 symmetrical to one another, for example consisting of headlight assemblies, and another vehicle element 4 interposed between the headlamps 3 and laterally delimited by them, in the non-limiting example shown herein consisting of a known radiator grille or mask. The vehicle element 4 can also consist, according to another possible embodiment, of a bumper or of a bumper portion, the headlamps 3 being, for example, a pair of fog lights.

Furthermore, what discussed below with reference to the front panel 1 can clearly be applied, in the exact same manner, in case it is needed, to a rear panel of the vehicle, where, instead of the headlamps 3, there is a pair of rear lamps and the vehicle element 4 consists of a vehicle body part or of a plate-holder.

According to figure 1, each lighting device consisting of a headlamp 3 is equipped with an aesthetic finishing element 5 according to the invention, which can be coupled on a lens 6 of the headlamp 3 consisting, in the example shown herein, of a front headlamp of the vehicle.

According to figure 2, on the other hand, the vehicle element 4 that is part of the front panel 1 (or of a rear panel of the vehicle which is not shown herein for the sake of simplicity) is equipped with a pair of aesthetic finishing elements 5c, which peripherally delimit, in the non-limiting example shown herein above and under, the vehicle element 4 (for example a radiator mask or grille or a bumper portion) and aesthetically (stylistically) join two known opposite aesthetic finishing elements 5b or "bezels", which are applied to the lenses 6 of the headlamps 3, defining a desired aesthetic pattern on the front panel 1.

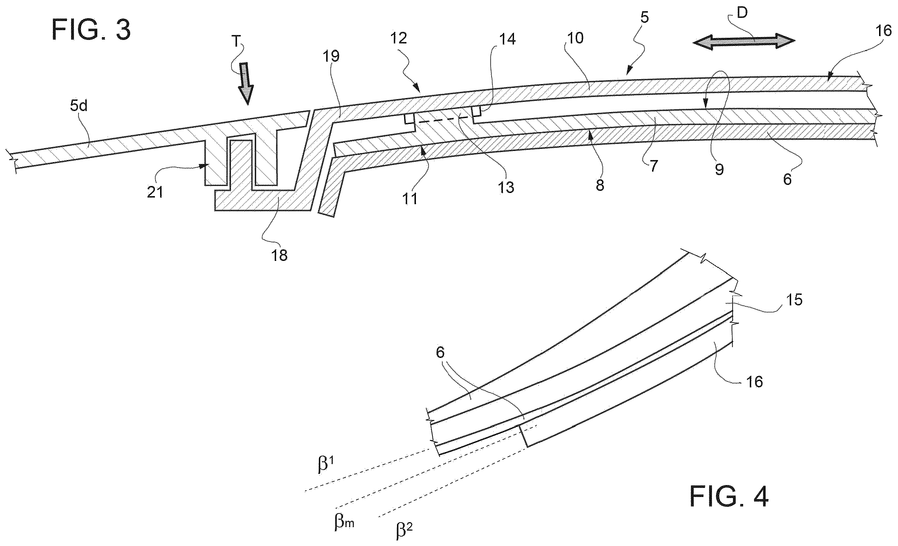

In both cases and with reference to figure 3 (which relates to the embodiment shown in figure 1, but, since it is purely schematic, also applies to figure 2 replacing the lens 6 with the element 4), each aesthetic finishing element 5 or 5c comprises a support 7 (which is not visible in figures 1 and 2) having a first face 8, which is configured to be fixed to the vehicle element 4 or 3 in a non-separable manner, and a second face 9, which is opposite the first face 8 and, in use, faces away from the vehicle element 4 or 3.

Each aesthetic finishing element 5 or 5c further comprises a profiled element 10 (also visible in figures 1 and 2), which is shaped like a channel and is coupled, in an integral manner, to the support 7, on the side of the second face 9, so as to cover the support 8 on the side of the face 9.

According to an aspect of the embodiment, the profiled element 10 is coupled to the support 7 in a sliding manner in a direction D, which is parallel to the second face 9.

To this aim, at least a first stretch 11 of the support 7 (figure 3) and a corresponding second stretch 12 of the profiled element 10 are provided with sliding elements 13,14 with a matching shape, a male and a female respectively or vice versa, which are coupled to one another.

The sliding elements 13, 14 are coupled in a snapping manner and are configured to allow the support 7 and the profiled element 10 to slide relative to one another.

In the embodiment of figure 1, the aesthetic finishing element 5 consists of a frame (an annular frame in the non-limiting example shown herein, but it can also be a semi-annular frame, for example shaped like an upside-down C with the open part facing the vehicle element 4) with a substantially rectangular shape, which is configured to be coupled, in an integral manner and on the outside, to the lens 6 of a vehicle lighting device, such as the headlamps 3.

The profiled element 10 is shaped like a frame fitted onto the corresponding support 7 (or a plurality of supports 7, which are separate from one another, but are aligned), which is glued or anyway fixed to the lens 6.

In the first non-limiting, though preferred embodiment, the profiled element 10 comprises at least two straight or curved branches 15, 16, which extend in the sliding direction D.

In this case, the support 7 can be made up of at least two or more elements 7b, 7c (figure 1), which are associated with one another and extend under the branches 15,16 of the profiled element 10.

With reference to figure 3, the branches 15, 16 of the profiled element 10 obviously comprise the second stretches 12 along at least part of their length and the elements 7b, 7c of the support 7 associated with one another are provided with the first stretches 11 along their entire length, so as to carry, in an integral manner and as one single piece, the sliding elements 13.

According to an advantageous embodiment, figure 1 shows an aesthetic finishing element 5 provided with at least one fastening element 18, which projects in the area of a first end 19 of the branches 15, 16 facing, in use, an inboard side 20 or vehicle-centre of the lighting device 3.

The first fastening element 19 is configured to be coupled, in a direction T that is substantially perpendicular or anyway transverse to the sliding direction D, to a second fastening element 21 (figure 3) of a known second aesthetic finishing element 5d, which is configured to be coupled, in an integral manner, to a second vehicle element 4, in the example shown herein, for example, a vehicle radiator mask or grille or a bumper portion) arranged alongside the inboard side 20 of each lighting device 3.

The fastening element 18 is further configured to be coupled (for example as schematically shown in figure 3) to the second fastening element 21 so as to stop the sliding of the profiled element 10 relative to the support 7.

As already mentioned, in a preferred first embodiment, the profiled element 10 consists of a frame, which is open on a first side 22 thereof adjacent to the inboard side 20 of the respective headlamp 3, is C-shaped and is configured to be coupled to a curved lens 6, wherein the first and the second branch 15,16 extend in the sliding direction D towards the first open side 22 of the frame 10 at a first and second angle, β1 and β2 respectively (figure 4), which are different from one another relative to a crossbar 23 (figure 1) of the frame 10 defining a second closed side of the frame 10.

The aforesaid first and second branch 15, 16 project from the crossbar 23.

According to an equally important aspect, in this embodiment of the aesthetic finishing element 5, the sliding elements 13 of the support 7 and 14 of the profiled element 10 carried by the two branches 15, 16 of the C-shaped frame, making up the profiled element 10, are oriented in the sliding direction D and, relative to the crossbar 23, at a third angle βm (figure 4), which is substantially equal to the arithmetic mean between the first and the second angle β1 and β2.

Figure 2, on the other hand, shows a second non-limiting, though preferred embodiment of the aesthetic finishing element. Similar details or those details that are the same as the ones already described above are indicated, for the sake of simplicity, with the same reference numbers.

The aesthetic finishing element 5c of figure 2 consists of a frame, which is substantially straight in the sliding direction D and is configured to be coupled, in an integral manner, to a vehicle element 4 consisting of a front or rear part of the vehicle, for example to a radiator grille 4 (figure 2) or a bumper (or bumper portion). In the example shown herein, there are two finishing elements 5c arranged above and under the vehicle element 4.

The profiled element 10 of each aesthetic finishing element 5c is divided, in this case, into two segments 24, which are substantially straight in the sliding direction D, and the support 7 is glued or anyway fixed to the vehicle element 4, that is part of the front or rear part of the vehicle.

In this embodiment, as well, the support 7 can be made up of at least two or more pairs of elements 7b, which are associated with one another and extend under the two segments 24 of the profiled element 10.

In this second embodiment, the segments 24 include the aforesaid second stretches 12 along at least part of their length and the elements 7b of the support 7 associated with one another are provided with the first stretches 11 along their entire length.

In this way, the segments 24 of the profiled element 10 of each finishing element 5c are relatively movable in the sliding direction D so that they can selectively move close to or away from one another and towards respective lighting devices (headlamps or lights) 3 of the vehicle arranged on opposite sides of the vehicle element 4.

In this second embodiment, furthermore, the aesthetic finishing element 5c comprises a mask 25 (schematically shown with a broken line in figure 2), which can be fitted, in a snapping manner, onto adjacent opposite ends 26 of the two segments 24 into which each profiled element 10 is divided. One single mask 25 can be provided to be separately fitted onto each aesthetic finishing element 5c or one single mask 25 can be provided to be fitted, in a snapping manner, onto both aesthetic finishing elements 5c present in the embodiment of figure 2, so as to delimit the vehicle element 4, whether it is a radiator grille or a bumper portion, at the top and at the bottom.

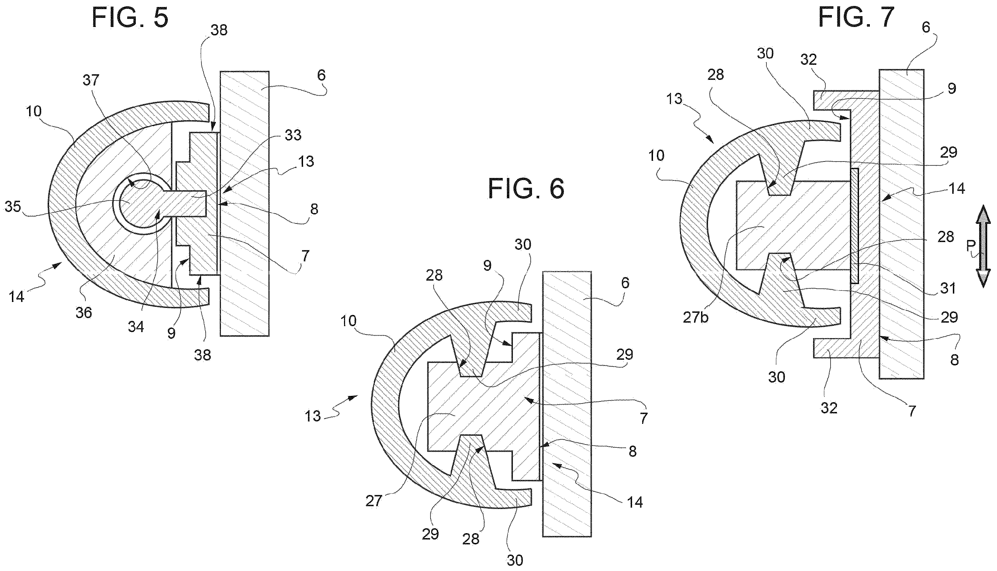

With reference to figures 5 to 7, they schematically show different possible embodiments for the sliding elements 13, 14, which can be applied to both embodiments 5 and 5c of the aesthetic finishing element of the invention.

With reference to figure 6, the male sliding elements 13 and the female sliding elements 14 with a matching shape comprise a rail 27, which is carried by the support 7 and extends perpendicularly, in a projecting manner, from the second face 9.

The rail 27 is manufactured, in this embodiment, so as to be integral to, and form with the support 7 one single piece.

The rail 27 is laterally provided, on its opposite sides, with a pair of opposite grooves 28, which are substantially straight and preferably have a trapezoid cross section.

The male sliding elements 13 and female sliding elements 14 with a matching shape further comprise a pair of opposite ribs 29, which are substantially straight, preferably have a trapezoid cross section and extend, in a projecting manner, towards one another inside the channel-shaped profiled element 10, starting from respective opposite lateral walls 30 of the profiled element 10, said ribs 29 being manufactured so as to be integral to and form with said walls 30 one single piece.

The ribs 29 are transversely spaced apart from one another in the area of their opposite free ends and in a direction that is perpendicular to the sliding direction D, with a gap that is smaller than a transverse extension of the rail 27.

Furthermore, the channel-shaped profiled element 10 is manufactured, for example by means of moulding of a synthetic plastic material, so as to be elastically deformable in a direction that is transverse to the sliding direction D, so that the ribs 29 can engage, in a snapping manner and in use, the grooves 28 of the rail 27 of the support 7, when the profiled element 10 is fitted onto the support 7, by simply pushing the profiled element 10 against the support 7.

With reference to the variant shown in figure 7, where similar details or those details that are the same as the ones already described above are indicated with the same reference numbers, the male sliding elements 13 and female sliding elements 14 comprise, in this case as well, a rail 27b, which is similar to the rail 27 and whose grooves 28 are engaged, in a snapping and sliding manner, by respective ribs 29, which transversely project from the lateral walls 30 of the profiled element 10.

According to this embodiment, however, the rail 27b is mounted on the support 7 so as to be movable in a direction P, which is perpendicular to the sliding direction D, preferably (as schematically shown in figure 7) within a transverse guide of the support.

Furthermore, in this embodiment, the support 7 is provided with opposite protruding edges 32, which project from the face 9 parallel to the rail 27b and serve as limit stops for the rail 27b in its transverse movement along the direction P, between the two limit stops formed by the edges 32.

In this way, possible misalignments along the direction Y - and not only along the direction X (figures 1 and 2) between the aesthetic finishing elements 5 and 5d (figure 1) and 5b and 5c (figure 2) - can be compensated owing to the fact that, once the correct position has been reached, the aesthetic finishing element 5, 5c according to the invention can be locked in this position by means of the fastening elements 18 and 21.

Finally, with reference to figure 5, it schematically shows a further embodiment of the sliding elements 13 and 14 with a matching shape.

In this embodiment, the male and female sliding elements 13 and 14 are reversed and are configured to allow for a limited tilting (oscillation) of the profiled element 10.

To this aim, a longitudinal rib 33, which extends in the sliding direction D, is carried in an integral manner by the support 7, from which it extends, perpendicularly projecting from the second face 9.

The rib 33 is made, for example, of a metal material partly buried in the support 7, which, instead, is made of a synthetic plastic material, or the rib 33 is also made of a synthetic plastic material and is over-moulded together with the support 7.

In any case, the rib 33 ends, at a free cantilevered end 34 thereof, which is opposite the second face 9 of the support 7, with an enlarged head 35 with a cylindrical symmetry.

A slide 36 is over-moulded on the profiled element 10, inside the latter, and is internally provided with a longitudinal cavity 37 with a cylindrical symmetry, which is open towards the support 7 and engages, in a snapping manner, the head 35 of the rib 33 integral to the support 7, so that the profiled element 10, besides being movable relative to the support 7 along the sliding direction D, can also tilt/oscillate crosswise to the sliding direction D, opposite longitudinal lateral edges 38 of the support 7 acting as limit stops to limit said oscillation.

In this way, again, the aesthetic finishing elements 5, 5c according to the invention can make up for possible shape misalignments with the aesthetic profiles with which they have to cooperate, in the examples shown and described herein consisting of known traditional aesthetic finishing elements 5b, 5d.

Furthermore, owing to the above, the invention clearly consists in an aesthetic finishing system 39 (figures 1 and 2) for a front (or rear) panel 1 of a vehicle, in which a pair of headlamps or lights 3 arranged alongside in a symmetrical position delimit, between them, a vehicle body element 4, for example a radiator grille or a bumper portion.

The aesthetic finishing system 39 comprises two first aesthetic finishing elements 5 or 5b, which are symmetric to one another and each consist of an annular or semi-annular frame, which is configured to be externally coupled, in an integral manner, to a lens 6 of each headlamp or light 3. Each first aesthetic finishing element 5 comprises, in turn, a support 7, which is glued or anyway fixed to the lens 6, and a first frame-shaped profiled element 10, which is shaped like a channel and is mounted on the support 7.

The aesthetic finishing system 39 further comprises a pair of second aesthetic finishing elements 5c, 5d, each consisting of a substantially straight frame, which is configured to be coupled, in an integral manner, to the vehicle body element 4 arranged between the two headlamps or lights 3 so as to substantially cooperate in contact with the first aesthetic finishing elements 5,5b in order to form a predetermined pattern, wherein the second aesthetic finishing elements 5c, 5d each comprise, as well, a second profiled element 10, which is configured to aesthetically join the first aesthetic finishing elements 5,5b to one another without gaps, and at least one support 7, which is glued or anyway fixed to the vehicle body element 4 and on which the second profiled element 10 is mounted.

According to the invention, at least the first profiled elements 10 of the aesthetic finishing elements 5, 5c are mounted so as to slide on the respective supports 7 along the sliding direction D, which is substantially parallel to a length extension of the second profiled elements 10 of the aesthetic finishing elements 5b, 5d, so that, in use, it is possible to make up for possible differences between the profiled elements 10 of the aesthetic finishing elements 5, 5c according to the invention and the ones of the traditional aesthetic finishing elements 5b, 5d.

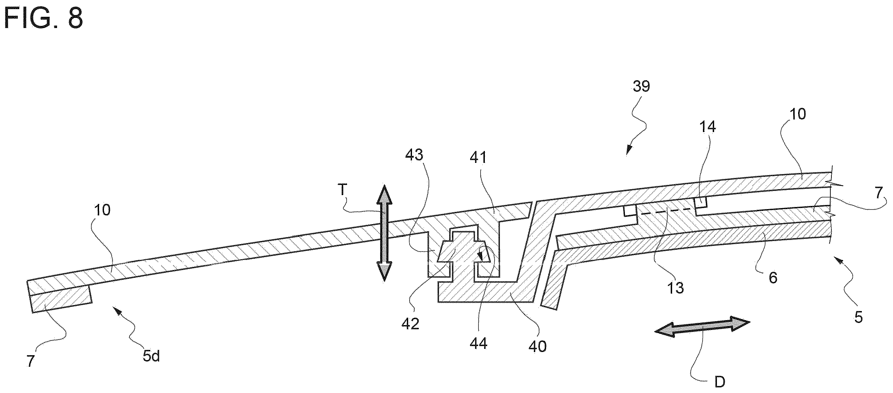

The aesthetic finishing system 39 further has the feature (figure 8) that adjacent ends 40, 41 of the first and of the second profiled elements 10 of the finishing elements 5 and 5d, respectively, are provided with respective first and second fastening elements 42,43 with a matching shape, which are configured to be coupled to one another in a direction T, which is perpendicular to the sliding direction D, in order to stop any relative sliding between the first and the second profiled elements 10.

Furthermore, in the aesthetic finishing system 39 of the invention, the first and second fastening elements 42, 43 are configured to be coupled to one another in a snapping manner by means of an undercut 44 obtained on the second fastening element 43.

The fastening elements 42, 43 are further carried, in an integral manner, by the relative adjacent opposite ends 40, 41 of the first and second profiled elements 10, which, according to an aspect of the invention, project from the respective support 7 to an extent that is such as to allow them to bend in the direction T in order to permit the mutual alignment of the first and second profiled elements 10 with one another and, subsequently, the locking thereof in an aligned position.

It is also clear that the aesthetic finishing system 39 can be obtained not only by coupling aesthetic finishing elements 5 or 5c to similar known or anyway non-adjustable aesthetic finishing elements 5b, 5d, but also by coupling only adjustable aesthetic finishing elements 5 and 5c, thus creating a hybrid form between the two embodiments of figures 1 and 2.

Finally, owing to the above, the invention clearly extends to a vehicle comprising an aesthetic finishing element 5, 5c or an aesthetic finishing system 30 according to any one of the embodiments described above.

All the embodiments described above for the finishing element or bezel 5 or 5c provide a stylistic content accompanied by the technical effect of permitting an easy and quick alignment of all the aesthetic profiles used on a front (or rear) panel 1 of a vehicle, also in the presence of relatively large processing tolerances, which would normally lead to the presence of misalignments, even though small ones, thus negatively affecting the aesthetic impact of the vehicle.

Therefore, all the objects of the invention are reached.

## Claims

1. An aesthetic finishing system (39) for a vehicle front or rear panel wherein a pair of headlamps or rear lamps (3) arranged alongside one another and in a symmetrical position delimit between one another a vehicle body element (4), for example a radiator grille or a portion of a bumper; wherein it comprises two first aesthetic finishing elements (5) symmetrical to one another and each consisting of an annular or semi-annular frame configured to be coupled externally integral to a lens (6) of each headlamp or rear lamp and comprising a support (7) glued or, otherwise, fixed to the lens and a first profiled element (10) having a channel-shaped frame mounted over the support; **characterized by** a pair of second aesthetic finishing elements (5d) each constituted by a substantially rectilinear frame configured to be coupled integral to said vehicle body element (4) comprised between said two headlamps or rear lamps to cooperate substantially in contact with the first aesthetic finishing elements (5) to form a pre-set pattern, the second aesthetic finishing elements (5d) each comprising a second profiled element (10) configured to aesthetically join the first aesthetic finishing elements (5) to one another continuously and at least a support (7) glued or, otherwise, fixed to the vehicle body element and on which the second profiled element is mounted;wherein at least said first profiled elements (10) of the first finishing elements (5) are mounted slidably on the respective support (7) along a sliding direction (D) substantially parallel to an extension in length of the second profiled elements (10) of the second finishing element (5d) to enable, in use, the recovery of possible deviations between the first and second profiled elements; adjacent ends (40,41) of the first and second profiled elements being provided with respective first and second fastening elements (42,43) matching with one another and configured to couple to one another in a direction (T) perpendicular to the sliding direction (D) for blocking each relative sliding between the first and second profiled elements (10).

2. The system according to claim 1, **characterised in that** said first and second fastening elements (42,43) are configured to snap-fit together by means of an undercut (44) made on the second fastening element; said first and second fastening elements (42,43) being carried integral by respective opposite adjacent ends (40,41) of the first and second profiled elements (10) which protrude in a cantilever fashion from respective supports (7) by an amount such as to be able to bend so as to allow the mutual alignment of the first and second profiled elements.

3. An aesthetic finishing element (5; 5c) for the aesthetic finishing system (39) according to claim 1 or 2, couplable to a vehicle element, for example a lighting device (3) such as a front headlamp of a vehicle or a front or rear vehicle part (4), comprising a support (7) having a first face (8) configured to be fixed integral to the vehicle element (3;4) and a second face (9), opposite to the first face and facing in use on the side opposite to the vehicle element, and a profiled element (10) which is channel-shaped and coupled integral to the support (7), on the side of the second face, wherein the profiled element (10) is coupled to the support (7) so as to slide in a direction (D) parallel to the second face (9), at least a first stretch (11) of the support and a corresponding second stretch (12) of the profiled element being provided with sliding elements (13,14) having matching shape, respectively male and female or vice versa, snap-fitted to one another and configured to enable a relative sliding between the support (7) and the profiled element (10); **characterized in that** the aesthetic finishing element (5) is constituted by an annular or semi-annular shaped frame configured to be coupled integral externally to a lens (6) of a lighting device (3) of a vehicle, the profiled element (10) being shaped like a frame fitted over the support (7), which is glued or, otherwise, fixed to the lens (6); the profiled element (10) comprising at least two rectilinear or curved branches (15,16) which extend in said sliding direction (D) and the support (7) being made like at least two or more elements (7b) associated with one another and which extend below said branches (15,16) of the profiled element (10); the branches (15,16) of the profiled element including said second stretches (12) for at least a part of their length and said elements (7b) associated with one another of the support (7) being provided with said first stretches (11) for their entire length; wherein
a) the aesthetic finishing element (5) is provided with at least a first fastening element (18) which extends in a cantilever fashion at a first end (19) of said branches (15,16) facing, in use, an inboard side or vehicle centre (20) of the lighting device (3), the first fastening element (18) being configured to couple in a direction (T) substantially perpendicular or, otherwise, transversal to the sliding direction (D) to a second fastening element (21) of a second aesthetic finishing element (5d) configured to be coupled integral to a second vehicle element (4) arranged alongside the inboard side (20) of the lighting device; said first fastening element (18) being furthermore configured to couple with the second fastening element (21) so as to block the sliding of the profiled element (10) with respect to the support (7); and
b) the profiled element (10) is formed of a frame open on a first side (22) thereof, having a C-shape and configured to couple with a curved lens (6), wherein a first and a second of said branches (15,16) extend in the sliding direction (D) towards the first open side (22) of the frame constituting the profiled element (10) with a first and a second angle (β1,β2) different from one another with respect to a crossbar (23) of the frame constituting the profiled element (10) and defining a second closed side of the same and on which said first and second branches (15,16) extend from the crossbar (23) in a cantilever fashion; said sliding elements (13,14) of the support (7) and of said first and second branches (15,16) of the C-shaped frame being oriented in the sliding direction and with respect to the crossbar of the frame with a third angle (βm) which is substantially equal to the arithmetic mean between the first and the second angles.

4. The aesthetic finishing element (5c) according to claim 3, **characterised in that** it is constituted by a frame substantially rectilinear in the sliding direction (D) configured to be coupled integral to a vehicle element (4) constituted by a front or rear vehicle part, for example with a radiator grille or a bumper; the profiled element (10) being divided into two segments (24) substantially rectilinear in the sliding direction (D) and the support (7) being glued or, otherwise, fixed to the front or rear vehicle part (4); the support (7) being made like at least two or more pairs of elements (7b) associated with one another and which extend below said segments (24) of the profiled element (10); wherein said segments (24) include said second stretches (12) for at least a part of their length and said elements (7b), associated with one another, of the support are provided with said first stretches (11) for their entire length; so that said segments (24) are relatively movable in the sliding direction (D) in order to be selectively moved closer to or farther from one another and towards respective headlamps or rear lamps (3) of the vehicle arranged on opposite sides of the vehicle element (4); the aesthetic finishing element (5c) further comprising a mask (25) snap-fittable over opposite adjacent ends (26) of said two segments into which the profiled element (10) is divided.

5. The aesthetic finishing element according to claim 3 or 4, **characterised in that** said male and female matching shaped sliding elements (13,14) comprise: a rail (27) carried by the support (7) and which extends perpendicularly in a cantilever fashion from the second face (9), the rail being provided laterally, on its opposite sides, with a pair of substantially rectilinear opposite grooves (28), preferably having a trapezoidal cross-section; and a pair of substantially rectilinear opposite ribs (29), preferably having a trapezoidal cross-section, which extend in a cantilever fashion one towards the other inside the channel-shaped profiled element (10) from respective opposite lateral walls (30) thereof with which they are obtained integral in one piece; said ribs (29) being transversely spaced from one another with a smaller gap than a transversal extension of the rail (27); the channel-shaped profiled element (10) being elastically deformable in a direction transversal to the sliding direction, so that the ribs (29) snap-engage the grooves (28) of the rail of the support.

6. The aesthetic finishing element according to claim 5, **characterised in that** said rail (27) is obtained integral in one piece with the support (7).

7. The aesthetic finishing element according to claim 5, **characterised in that** said rail (27) is mounted on the support (7) movable in a direction (P) perpendicular to the sliding direction (D), preferably within a transversal guide (31) of the support.

8. The aesthetic finishing element according to claim 3, **characterised in that** said matching shaped male and female sliding elements (13,14) comprise: a longitudinal rib (33) that extends in the sliding direction (D) and is carried integral by the support (7), from which it extends perpendicularly in a cantilever fashion on the side of the second face (9) and terminates at its free cantilevered end (34), opposite to the second face of the support, with a head (35) having an enlarged cylindrical symmetry; and a slide (36), co-moulded with the profiled element (10), inside of the same, provided internally with a longitudinal cavity (37) having a cylindrical symmetry open towards the support (7) and that snap-engages the head (35) of the rib integral with the support, so that the profiled element (10), in addition to being movable with respect to the support along the sliding direction (D), can also tilt transversally to the sliding direction.

9. A vehicle comprising an aesthetic finishing element (5;5c) or an aesthetic finishing system (39) according to one of the preceding claims.

## Patentansprüche

1. Ästhetisches Veredelungssystem (39) für eine Fahrzeugfront oder -rückwand, bei dem ein Paar Scheinwerfer oder Rückleuchten (3), die nebeneinander und in einer symmetrischen Position angeordnet sind, zwischen sich ein Fahrzeugkarosserieelement (4), beispielsweise einen Kühlergrill oder einen Teil eines Stoßfängers, abgrenzen; wobei es zwei erste ästhetische Veredelungselemente (5) umfasst, die zueinander symmetrisch sind und jeweils aus einem ringförmigen oder halbringförmigen Rahmen bestehen, der so konfiguriert ist, dass er außen einstückig mit einer Linse (6) jedes Scheinwerfers oder jeder Rückleuchte gekoppelt wird, und einen Träger (7), der auf die Linse geklebt oder anderweitig daran befestigt ist, und ein erstes Profilelement (10) mit einem kanalförmigen Rahmen umfasst, der über dem Träger angebracht ist; **gekennzeichnet durch** ein Paar zweiter ästhetischer Veredelungselemente (5d), die jeweils aus einem im Wesentlichen geradlinigen Rahmen bestehen, der so konfiguriert ist, dass er einstückig mit dem zwischen den beiden Scheinwerfern oder Rückleuchten befindlichen Fahrzeugkarosserieelement (4) gekoppelt werden kann, um im Wesentlichen in Kontakt mit den ersten ästhetischen Veredelungselementen (5) zusammenzuwirken, um ein vorgegebenes Muster zu bilden, wobei die zweiten ästhetischen Veredelungselemente (5d) jeweils ein zweites Profilelement (10), das so konfiguriert ist, dass es die ersten ästhetischen Veredelungselemente (5) kontinuierlich miteinander verbindet, und mindestens einen Träger (7) umfassen, der auf das Fahrzeugkarosserieelement geklebt oder anderweitig daran befestigt ist und auf dem das zweite Profilelement angebracht ist; wobei mindestens die ersten Profilelemente (10) der ersten Veredelungselemente (5) auf dem jeweiligen Träger (7) entlang einer Gleitrichtung (D), die im Wesentlichen parallel zu einer Längenausdehnung der zweiten Profilelemente (10) des zweiten Veredelungselements (5d) verläuft, verschiebbar angebracht sind, um im Gebrauch die Wiederherstellung möglicher Abweichungen zwischen den ersten und zweiten Profilelementen zu ermöglichen; wobei benachbarte Enden (40, 41) der ersten und zweiten Profilelemente mit entsprechenden ersten und zweiten Befestigungselementen (42, 43) versehen sind, die zueinander passen und so konfiguriert sind, dass sie in einer Richtung (T) senkrecht zur Gleitrichtung (D) aneinander gekoppelt werden, um jedes relative Gleiten zwischen den ersten und zweiten Profilelementen (10) zu blockieren.

2. System nach Anspruch 1, **dadurch gekennzeichnet, dass** das erste und das zweite Befestigungselement (42, 43) so konfiguriert sind, dass sie mittels einer Hinterschneidung (44), die an dem zweiten Befestigungselement ausgeführt ist, ineinander einrasten; wobei das erste und das zweite Befestigungselement (42, 43) einstückig von jeweiligen gegenüberliegenden benachbarten Enden (40, 41) des ersten und des zweiten Profilelements (10) getragen werden, die freitragend von jeweiligen Trägern (7) um einen solchen Betrag vorstehen, dass sie in der Lage sind, sich so zu biegen, dass sie die gegenseitige Ausrichtung des ersten und des zweiten Profilelements ermöglichen.

3. Ästhetisches Veredelungselement (5; Sc) für das ästhetische Veredelungssystem (39) nach Anspruch 1 oder 2, das an ein Fahrzeugelement, beispielsweise eine Beleuchtungsvorrichtung (3) wie einen Frontscheinwerfer eines Fahrzeugs oder ein vorderes oder hinteres Fahrzeugteil (4), ankoppelbar ist, umfassend einen Träger (7), der eine erste Fläche (8), die konfiguriert ist, um einstückig an dem Fahrzeugelement (3;4) befestigt zu werden, und eine zweite Fläche (9) aufweist, die der ersten Fläche gegenüberliegt und im Gebrauch auf die dem Fahrzeugelement gegenüberliegende Seite weist, und ein Profilelement (10), das kanalförmig ist und einstückig mit dem Träger (7) gekoppelt ist, auf der Seite der zweiten Fläche, wobei das Profilelement (10) mit dem Träger (7) so gekoppelt ist, dass es in einer Richtung (D) parallel zu der zweiten Fläche (9) gleitet, wobei mindestens ein erster Abschnitt (11) des Trägers und ein entsprechender zweiter Abschnitt (12) des Profilelements mit Gleitelementen (13, 14) versehen sind, die eine passende Form haben, die jeweils männlich und weiblich oder umgekehrt sind, ineinander einrasten und so konfiguriert sind, dass sie ein relatives Gleiten zwischen dem Träger (7) und dem Profilelement (10) ermöglichen; **dadurch gekennzeichnet, dass** das ästhetische Veredelungselement (5) aus einem ringförmigen oder halbringförmigen Rahmen besteht, der so konfiguriert ist, dass er von außen einstückig mit einer Linse (6) einer Beleuchtungsvorrichtung (3) eines Fahrzeugs gekoppelt werden kann, wobei das Profilelement (10) wie ein Rahmen geformt ist, der auf den Träger (7) aufgesetzt ist, der auf die Linse (6) geklebt oder anderweitig befestigt ist; wobei das Profilelement (10) mindestens zwei geradlinige oder gekrümmte Schenkel (15, 16) aufweist, die sich in Gleitrichtung (D) erstrecken, und der Träger (7) wie mindestens zwei oder mehr Elemente (7b) ausgebildet ist, die miteinander verbunden sind und sich unterhalb der Schenkel (15, 16) des Profilelements (10) erstrecken; wobei die Schenkel (15, 16) des Profilelements die zweiten Abschnitte (12) über mindestens einen Teil ihrer Länge einschließen und die miteinander verbundenen Elemente (7b) des Trägers (7) über ihre gesamte Länge mit den ersten Abschnitten (11) versehen sind; wobei
a) das ästhetische Veredelungselement (5) mit mindestens einem ersten Befestigungselement (18) versehen ist, das sich freitragend an einem ersten Ende (19) der Schenkel (15, 16) erstreckt, die im Gebrauch einer Innenseite oder Fahrzeugmitte (20) der Beleuchtungsvorrichtung (3) zugewandt sind, wobei das erste Befestigungselement (18) so konfiguriert ist, dass es in einer Richtung (T) im Wesentlichen senkrecht oder andernfalls quer zur Gleitrichtung (D) mit einem zweiten Befestigungselement (21) eines zweiten ästhetischen Veredelungselements (5d) koppelt, das so konfiguriert ist, dass es einstückig mit einem zweiten Fahrzeugelement (4) gekoppelt wird, das entlang der Innenseite (20) der Beleuchtungsvorrichtung angeordnet ist; wobei das erste Befestigungselement (18) außerdem so konfiguriert ist, dass es mit dem zweiten Befestigungselement (21) koppelt, um das Gleiten des Profilelements (10) in Bezug auf den Träger (7) zu blockieren; und
b) das Profilelement (10) aus einem Rahmen gebildet ist, der an einer ersten Seite (22) desselben offen ist, eine C-Form aufweist und so konfiguriert ist, dass er mit einer gekrümmten Linse (6) koppelt, wobei sich ein erster und ein zweiter der Schenkel (15, 16) in der Gleitrichtung (D) zu der ersten offenen Seite (22) des das Profilelement (10) bildenden Rahmens mit einem ersten und einem zweiten Winkel (81,82), die sich voneinander unterscheiden, in Bezug auf einen Querbalken (23) des Rahmens, der das Profilelement (10) bildet und eine zweite geschlossene Seite desselben definiert und auf dem sich die ersten und zweiten Schenkel (15, 16) von dem Querbalken (23) freitragend erstrecken; wobei die Gleitelemente (13, 14) des Trägers (7) und des ersten und zweiten Schenkels (15, 16) des C-förmigen Rahmens in der Gleitrichtung und in Bezug auf die Querstange des Rahmens mit einem dritten Winkel (Em) ausgerichtet sind, der im Wesentlichen gleich dem arithmetischen Mittel zwischen dem ersten und dem zweiten Winkel ist.

4. Ästhetisches Veredelungselement (5c) nach Anspruch 3, **dadurch gekennzeichnet, dass** es aus einem in Gleitrichtung (D) im Wesentlichen geradlinigen Rahmen besteht, der so konfiguriert ist, dass er einstückig mit einem Fahrzeugelement (4) gekoppelt werden kann, das aus einem vorderen oder hinteren Fahrzeugteil besteht, beispielsweise mit einem Kühlergrill oder einem Stoßfänger; wobei das Profilelement (10) in zwei Segmente (24) unterteilt ist, die in der Gleitrichtung (D) im Wesentlichen geradlinig sind, und der Träger (7) an das vordere oder hintere Fahrzeugteil (4) geklebt oder anderweitig daran befestigt ist; wobei der Träger (7) aus mindestens zwei oder mehr Paaren von Elementen (7b) besteht, die miteinander verbunden sind und sich unter den Segmenten (24) des Profilelements (10) erstrecken; wobei die Segmente (24) die zweiten Abschnitte (12) über mindestens einen Teil ihrer Länge einschließen und die miteinander verbundenen Elemente (7b) des Trägers über ihre gesamte Länge mit den ersten Abschnitten (11) versehen sind; so dass die Segmente (24) in der Gleitrichtung (D) relativ beweglich sind, um selektiv näher zueinander oder weiter voneinander und zu den jeweiligen Scheinwerfern oder Rückleuchten (3) des Fahrzeugs, die auf gegenüberliegenden Seiten des Fahrzeugelements (4) angeordnet sind, bewegt zu werden; wobei das ästhetische Veredelungselement (5c) ferner eine Maske (25) umfasst, die über gegenüberliegenden benachbarten Enden (26) der beiden Segmente, in die das Profilelement (10) unterteilt ist, einrastbar ist.

5. Ästhetisches Veredelungselement nach Anspruch 3 oder 4, **dadurch gekennzeichnet, dass** die passend geformten männlichen und weiblichen Gleitelemente (13, 14) Folgendes umfassen: eine Schiene (27), die von dem Träger (7) getragen wird und sich senkrecht freitragend von der zweiten Fläche (9) aus erstreckt, wobei die Schiene seitlich an ihren gegenüberliegenden Seiten mit einem Paar von im Wesentlichen geradlinigen gegenüberliegenden Nuten (28) versehen ist, die vorzugsweise einen trapezförmigen Querschnitt aufweisen; und ein Paar von im Wesentlichen geradlinigen gegenüberliegenden Rippen (29), vorzugsweise mit trapezförmigem Querschnitt, die sich im Inneren des kanalförmigen Profilelements (10) von dessen jeweiligen gegenüberliegenden Seitenwänden (30), mit denen sie einstückig ausgebildet sind, freitragend aufeinander erstrecken; wobei die Rippen (29) in Querrichtung mit einem geringeren Abstand voneinander beabstandet sind als eine Quererstreckung der Schiene (27); wobei das kanalförmige Profilelement (10) in einer Richtung quer zur Gleitrichtung elastisch verformbar ist, so dass die Rippen (29) in die Nuten (28) der Schiene des Trägers einrasten.

6. Ästhetisches Veredelungselement nach Anspruch 5, **dadurch gekennzeichnet, dass** die Schiene (27) einstückig mit dem Träger (7) ausgebildet ist.

7. Ästhetisches Veredelungselement nach Anspruch 5, **dadurch gekennzeichnet, dass** die Schiene (27) auf dem Träger (7) in einer Richtung (P) senkrecht zur Gleitrichtung (D), vorzugsweise innerhalb einer Querführung (31) des Trägers, beweglich angebracht ist.

8. Ästhetisches Veredelungselement nach Anspruch 3, **dadurch gekennzeichnet, dass** die passend geformten männlichen und weiblichen Gleitelemente (13, 14) Folgendes umfassen: eine Längsrippe (33), die sich in Gleitrichtung (D) erstreckt und einstückig vom Träger (7) getragen wird, von dem aus sie sich senkrecht freitragend auf der Seite der zweiten Fläche (9) erstreckt und an ihrem freien, freitragenden Ende (34), das der zweiten Fläche des Trägers gegenüberliegt, in einem Kopf (35) endet, der eine vergrößerte zylindrische Symmetrie aufweist; und einen Schieber (36), der zusammen mit dem Profilelement (10) im Inneren desselben geformt ist und innen mit einem länglichen Hohlraum (37) mit zylindrischer Symmetrie versehen ist, der zum Träger (7) hin offen ist und in den Kopf (35) der mit dem Träger einstückig verbundenen Rippe einrastet, so dass das Profilelement (10) nicht nur in Bezug auf den Träger entlang der Gleitrichtung (D) beweglich ist, sondern auch quer zur Gleitrichtung kippen kann.

9. Fahrzeug mit einem ästhetischen Veredelungselement (5; 5c) oder einem ästhetischen Veredelungssystem (39) nach einem der vorstehenden Ansprüche.

## Revendications

1. Système de finition esthétique (39) pour une façade avant ou arrière de véhicule, dans lequel une paire de projecteurs ou de feux arrière (3) agencés l'un à côté de l'autre et dans une position symétrique délimitent entre eux un élément de carrosserie de véhicule (4), par exemple une calandre ou une portion d'un bouclier ; dans lequel il comprend deux premiers éléments de finition esthétique (5) symétriques l'un à l'autre et consistant chacun en un cadre annulaire ou semi-annulaire configuré pour être couplé extérieurement de manière solidaire à un verre (6) de chaque projecteur ou feu arrière et comprenant un support (7) collé ou sinon fixé au verre et un premier élément profilé (10) ayant un cadre en forme de canal monté sur le support ; **caractérisé par** une paire de deuxièmes éléments de finition esthétique (5d) constitués chacun d'un cadre sensiblement rectiligne configuré pour être couplé de manière solidaire audit élément de carrosserie de véhicule (4) compris entre lesdits deux projecteurs ou feux arrière pour coopérer sensiblement en contact avec les premiers éléments de finition esthétique (5) pour former un motif prédéfini, les deuxièmes éléments de finition esthétique (5d) comprenant chacun un deuxième élément profilé (10) configuré pour joindre de manière esthétique les premiers éléments de finition esthétique (5) l'un à l'autre de manière continue et au moins un support (7) collé ou sinon fixé à l'élément de carrosserie de véhicule et sur lequel le deuxième élément profilé est monté ; dans lequel au moins lesdits premiers éléments profilés (10) des premiers éléments de finition (5) sont montés de manière coulissante sur le support (7) respectif le long d'une direction de coulissement (D) sensiblement parallèle à une extension en longueur des deuxièmes éléments profilés (10) du deuxième élément de finition (5d) pour permettre, en utilisation, la récupération d'éventuels écarts entre les premiers et deuxièmes éléments profilés ; des extrémités (40, 41) adjacentes des premier et deuxième éléments profilés étant munies de premier et deuxième éléments de fixation (42, 43) respectifs concordant l'un à l'autre et configurés pour se coupler l'un à l'autre dans une direction (T) perpendiculaire à la direction de coulissement (D) pour le blocage de chaque coulissement relatif entre les premier et deuxième éléments profilés (10).

2. Système selon la revendication 1, **caractérisé en ce que** lesdits premier et deuxième éléments de fixation (42, 43) sont configurés pour s'encliqueter au moyen d'une contre-dépouille (44) réalisée sur le deuxième élément de fixation ; lesdits premier et deuxième éléments de fixation (42, 43) étant portés de manière solidaire par des extrémités (40, 41) adjacentes opposées respectives des premier et deuxième éléments profilés (10) qui font saillie d'une manière en porte-à-faux à partir de supports (7) respectifs d'une quantité telle qu'elles sont aptes à se courber de façon à permettre l'alignement mutuel des premier et deuxième éléments profilés.

3. Élément de finition esthétique (5 ; 5c) pour le système de finition esthétique (39) selon la revendication 1 ou 2, apte à être couplé à un élément de véhicule, par exemple un dispositif d'éclairage (3) tel qu'un projecteur avant d'un véhicule ou une partie avant ou arrière de véhicule (4), comprenant un support (7) ayant une première face (8) configurée pour être fixée de manière solidaire à l'élément de véhicule (3 ; 4) et une deuxième face (9), opposée à la première face et lui faisant face en utilisation sur le côté opposé à l'élément de véhicule, et un élément profilé (10) qui est en forme de canal et couplé de manière solidaire au support (7), sur le côté de la deuxième face, dans lequel l'élément profilé (10) est couplé au support (7) de façon à coulisser dans une direction (D) parallèle à la deuxième face (9), au moins un premier tronçon (11) du support et un deuxième tronçon (12) correspondant de l'élément profilé étant munis d'éléments coulissants (13, 14) ayant une forme concordante, respectivement mâle et femelle ou vice versa, encliquetés l'un sur l'autre et configurés pour permettre un coulissement relatif entre le support (7) et l'élément profilé (10) ; **caractérisé en ce que** l'élément de finition esthétique (5) est constitué d'un cadre de forme annulaire ou semi-annulaire configuré pour être couplé extérieurement de manière solidaire à un verre (6) d'un dispositif d'éclairage (3) d'un véhicule, l'élément profilé (10) étant mis en forme comme un cadre ajusté sur le support (7), qui est collé ou sinon fixé au verre (6) ; l'élément profilé (10) comprenant au moins deux branches (15, 16) rectilignes ou incurvées qui s'étendent dans ladite direction de coulissement (D) et le support (7) étant réalisé comme au moins deux éléments (7b) ou plus associés les uns aux autres et qui s'étendent au-dessous desdites branches (15, 16) de l'élément profilé (10) ; les branches (15, 16) de l'élément profilé incluant lesdits deuxièmes tronçons (12) sur au moins une partie de leur longueur et lesdits éléments (7b) associés les uns aux autres du support (7) étant munis desdits premiers tronçons (11) sur la totalité de leur longueur ; dans lequel
a) l'élément de finition esthétique (5) est muni d'au moins un premier élément de fixation (18) qui s'étend d'une manière en porte-à-faux à une première extrémité (19) desdites branches (15, 16) faisant face, en utilisation, à un côté intérieur ou centre de véhicule (20) du dispositif d'éclairage (3), le premier élément de fixation (18) étant configuré pour se coupler dans une direction (T) sensiblement perpendiculaire ou sinon transversale à la direction de coulissement (D) à un deuxième élément de fixation (21) d'un deuxième élément de finition esthétique (5d) configuré pour être couplé de manière solidaire à un deuxième élément de véhicule (4) agencé le long du côté intérieur (20) du dispositif d'éclairage ; ledit premier élément de fixation (18) étant en outre configuré pour se coupler au deuxième élément de fixation (21) de façon à bloquer le coulissement de l'élément profilé (10) par rapport au support (7) ; et
b) l'élément profilé (10) est formé d'un cadre ouvert sur un premier côté (22) de celui-ci, ayant une forme en C et configuré pour se coupler à un verre (6) incurvé, dans lequel une première et une deuxième desdites branches (15, 16) s'étendent dans la direction de coulissement (D) vers le premier côté ouvert (22) du cadre constituant l'élément profilé (10) avec un premier et un deuxième angle (β1, β2) différents l'un de l'autre par rapport à une traverse (23) du cadre constituant l'élément profilé (10) et définissant un deuxième côté fermé de celui-ci et sur lequel lesdites première et deuxième branches (15, 16) s'étendent à partir de la traverse (23) d'une manière en porte-à-faux ; lesdits éléments coulissants (13, 14) du support (7) et desdites première et deuxième branches (15, 16) du cadre en forme en C étant orientés dans la direction de coulissement et par rapport à la traverse du cadre avec un troisième angle (βm) qui est sensiblement égal à la moyenne arithmétique entre le premier et le deuxième angle.

4. Élément de finition esthétique (5c) selon la revendication 3, **caractérisé en ce qu'**il est constitué d'un cadre sensiblement rectiligne dans la direction de coulissement (D) configuré pour être couplé de manière solidaire à un élément de véhicule (4) constitué par une partie avant ou arrière de véhicule, par exemple à une calandre ou un bouclier ; l'élément profilé (10) étant divisé en deux segments (24) sensiblement rectilignes dans la direction de coulissement (D) et le support (7) étant collé ou sinon fixé à la partie avant ou arrière de véhicule (4) ; le support (7) étant réalisé comme au moins deux paires d'éléments (7b) ou plus associés les uns aux autres et qui s'étendent au-dessous desdits segments (24) de l'élément profilé (10) ; dans lequel lesdits segments (24) incluent lesdits deuxièmes tronçons (12) sur au moins une partie de leur longueur et lesdits éléments (7b), associés les uns aux autres, du support sont munis desdits premiers tronçons (11) sur la totalité de leur longueur ; de sorte que lesdits segments (24) soient relativement mobiles dans la direction de coulissement (D) afin d'être sélectivement rapprochés ou éloignés l'un de l'autre et vers des projecteurs ou feux arrière (3) respectifs du véhicule agencés sur des côtés opposés de l'élément de véhicule (4) ; l'élément de finition esthétique (5c) comprenant en outre un masque (25) apte à être encliqueté sur des extrémités (26) adjacentes opposées desdits deux segments en lesquels l'élément profilé (10) est divisé.

5. Élément de finition esthétique selon la revendication 3 ou 4, **caractérisé en ce que** lesdits éléments coulissants (13, 14) mâle et femelle de forme concordante comprennent : un rail (27) porté par le support (7) et qui s'étend perpendiculairement d'une manière en porte-à-faux à partir de la deuxième face (9), le rail étant muni latéralement, sur ses côtés opposés, d'une paire de rainures (28) opposées sensiblement rectilignes, de préférence ayant une section transversale trapézoïdale ; et une paire de nervures (29) opposées sensiblement rectilignes, de préférence ayant une section transversale trapézoïdale, qui s'étendent d'une manière en porte-à-faux l'une vers l'autre à l'intérieur de l'élément profilé en forme de canal (10) à partir de parois latérales (30) opposées respectives de celui-ci, avec lesquelles elles sont obtenues de manière solidaire d'un seul tenant ; lesdites nervures (29) étant espacées transversalement l'une de l'autre avec un plus petit écartement qu'une extension transversale du rail (27) ; l'élément profilé en forme de canal (10) étant élastiquement déformable dans une direction transversale à la direction de coulissement, de sorte que les nervures (29) se mettent en prise par encliquetage dans les rainures (28) du rail du support.

6. Élément de finition esthétique selon la revendication 5, **caractérisé en ce que** ledit rail (27) est obtenu de manière solidaire d'un seul tenant avec le support (7).

7. Élément de finition esthétique selon la revendication 5, **caractérisé en ce que** ledit rail (27) est monté sur le support (7) mobile dans une direction (P) perpendiculaire à la direction de coulissement (D), de préférence au sein d'un guide transversal (31) du support.

8. Élément de finition esthétique selon la revendication 3, **caractérisé en ce que** lesdits éléments coulissants (13, 14) mâle et femelle de forme concordante comprennent : une nervure longitudinale (33) qui s'étend dans la direction de coulissement (D) et est portée de manière solidaire par le support (7), à partir duquel elle s'étend perpendiculairement d'une manière en porte-à-faux sur le côté de la deuxième face (9) et se termine à son extrémité libre en porte-à-faux (34), opposée à la deuxième face du support, par une tête (35) ayant une symétrie cylindrique élargie ; et une glissière (36), co-moulée avec l'élément profilé (10), à l'intérieur de celui-ci, munie intérieurement d'une cavité longitudinale (37) ayant une symétrie cylindrique ouverte vers le support (7) et qui se met en prise par encliquetage avec la tête (35) de la nervure de manière solidaire avec le support, de sorte que l'élément profilé (10), en plus d'être mobile par rapport au support le long de la direction de coulissement (D), puisse également s'incliner transversalement à la direction de coulissement.

9. Véhicule comprenant un élément de finition esthétique (5 ; 5c) ou un système de finition esthétique (39) selon l'une des revendications précédentes.
